# EUROPEAN PATENT APPLICATION

(11) **EP 4 679 877 A1**
(43) Date of publication of application: **14.01.2026**
(21) Application number: 24797394.4
(22) Date of filing: 24.04.2024
(51) Int. Cl.: H04W 12/30, H04W 12/04, H04W 12/40, H04W 8/24, H04L 67/303, H04L 41/0806

(54) **TEMPORARY ENCRYPTION KEY MANAGEMENT METHOD AND APPARATUS FOR PROFILE PROVISIONING IN WIRELESS COMMUNICATION SYSTEM**

(30) Priority: 24.04.2023 KR 20230053343
(71) Applicant: Samsung Electronics Co., Ltd, Suwon-si, Gyeonggi-do 16677 (KR)
(72) Inventor: YOON, Kangjin, Suwon-si, Gyeonggi-do 16677 (KR); KANG, Sujung, Suwon-si, Gyeonggi-do 16677 (KR)
(74) Representative: Gulde & Partner
(86) International application number: PCT/KR2024/005520
(87) International publication number: WO 2024/225739

(57) **Abstract**

The present disclosure relates to a 5G or 6G communication system for supporting a higher data transmission rate. A method performed by a base station in a wireless communication system may comprise a control signal processing step comprising the steps of: receiving a first control signal being transmitted from the base station; processing the received first control signal; and transmitting, to the base station, a second control signal generated on the basis of the processing.

## Description

### [Technical Field]

The disclosure relates to a method and a device for provisioning a profile in a wireless communication system and, specifically, to a method and a device for provisioning multiple profiles to a terminal in a wireless communication system.

### [Background Art]

5G mobile communication technologies define broad frequency bands to enable high transmission rates and new services, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (e.g., 95GHz to 3THz bands) in order to accomplish transmission rates fifty times faster than 5G mobile communication technologies and ultra-low latencies one-tenth of 5G mobile communication technologies.

In the initial stage of 5G mobile communication technologies, in order to support services and to satisfy performance requirements in connection with enhanced Mobile BroadBand (eMBB), Ultra Reliable & Low Latency Communications (URLLC), and massive Machine-Type Communications (mMTC), there has been ongoing standardization regarding beamforming and massive MIMO for alleviating radio-wave path loss and increasing radio-wave transmission distances in mmWave, numerology (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large-capacity data transmission and a polar code for highly reliable transmission of control information, L2 pre-processing, and network slicing for providing a dedicated network customized to a specific service.

Currently, there are ongoing discussions regarding improvement and performance enhancement of initial 5G mobile communication technologies in view of services to be supported by 5G mobile communication technologies, and there has been physical layer standardization regarding technologies such as Vehicle-to-everything (V2X) for aiding driving determination by autonomous vehicles based on information regarding positions and states of vehicles transmitted by the vehicles and for enhancing user convenience, New Radio Unlicensed (NR-U) aimed at system operations conforming to various regulation-related requirements in unlicensed bands, NR UE Power Saving, Non-Terrestrial Network (NTN) which is UE-satellite direct communication for securing coverage in an area in which communication with terrestrial networks is unavailable, and positioning.

Moreover, there has been ongoing standardization in wireless interface architecture/protocol fields regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service fields regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

If such 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting Augmented Reality (AR), Virtual Reality (VR), Mixed Reality (MR), etc., 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for securing coverage in terahertz bands of 6G mobile communication technologies, Full Dimensional MIMO (FD-MIMO), multi-antenna transmission technologies such as array antennas and large-scale antennas, metamaterial-based lenses and antennas for improving coverage of terahertz band signals, high-dimensional space multiplexing technology using Orbital Angular Momentum (OAM), and Reconfigurable Intelligent Surface (RIS), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

A mobile communication subscriber may use a mobile communication operator network and an application service through an embedded universal integrated circuit card (eUICC) of a mobile communication terminal. If the mobile communication subscriber desires to use another mobile communication service, the usage is possible through remotely downloading a subscriber identity module (SIM) for the other mobile communication service to the eUICC. Meanwhile, in order for a terminal manufacturer to install a profile in an eUICC and sell a mobile communication terminal, information on the eUICC needs to be requested to a profile server. However, this accompanies a real-time network connection between a terminal manufacturer factory and the profile server or a process of transmitting and receiving multiple messages for mutual authentication with the server, thereby causing inefficiency.

### [Disclosure of Invention]

### [Technical Problem]

Accordingly, an aspect of the disclosure is to propose a profile installation and provision device and method enabling effective usage of a service in a wireless communication system.

### [Solution to Problem]

According to an embodiment of the disclosure, a method performed by a terminal in a wireless communication system may include receiving a first control signal transmitted from a factory IT, processing the received first control signal, and transmitting a second control signal generated based on the processing to the factory IT.

In addition, according to an embodiment of the disclosure, a method performed by a profile server in a wireless communication system may include receiving a first control signal transmitted from a factory IT, processing the received first control signal, and transmitting a second control signal generated based on the processing to the factory IT.

In addition, a method of an in-factory profile provisioning (IFPP) server in a communication system according to an example of the disclosure may include obtaining, from a manufacturer server of an embedded universal integrated circuit card (eUICC), encryption key information on each of a plurality of eUICCs, transmitting, to a profile provisioning server, a request message for requesting a bound profile package (BPP) for at least one eUICC among the plurality of eUICCs based on the encryption key information,, the request message including encryption key-related information on each of the at least one eUICC, and receiving, from the profile provisioning server, a response message including the BPP based on the request message, wherein the encryption key-related information includes information associated with an algorithm used for generating a temporary key for each of the at least one eUICC, and wherein the BPP transferred from the IFPP server via an application of a corresponding terminal is installed in an eUICC of the corresponding terminal.

In addition, a method of a profile provisioning server in a communication system according to an example of the disclosure may include receiving, from an in-factory profile provisioning (IFPP) server, a request message for requesting a bound profile package (BPP) for at least one embedded universal integrated circuit card (eUICC), the request message including encryption key-related information on each of the at least one eUICC, generating the BPP based on the encryption key-related information, and transmitting, to the IFPP server, a response message including the BPP, wherein the encryption key-related information includes information associated with an algorithm used for generating a temporary key for each of the at least one eUICC, and wherein the BPP is installed in an eUICC of a corresponding terminal via the IFPP server.

In addition, an in-factory profile provisioning (IFPP) server in a communication system according to an example of the disclosure may include a transceiver and a controller, wherein the controller is configured to obtain, from a manufacturer server of an embedded universal integrated circuit card (eUICC), encryption key information on each of a plurality of eUICCs, control the transceiver to transmit, to a profile provisioning server, a request message for requesting a bound profile package (BPP) for at least one eUICC among the plurality of eUICCs based on the encryption key information,, the request message including encryption key-related information on each of the at least one eUICC, and control the transceiver to receive, from the profile provisioning server, a response message including the BPP based on the request message, wherein the encryption key-related information includes information associated with an algorithm used for generating a temporary key for each of the at least one eUICC, and wherein the BPP transferred from the IFPP server via an application of a corresponding terminal is installed in an eUICC of the corresponding terminal.

In addition, a profile provisioning server in a communication system according to an example of the disclosure may include a transceiver and a controller, wherein the controller is configured to control the transceiver to receive, from an in-factory profile provisioning (IFPP) server, a request message for requesting a bound profile package (BPP) for at least one embedded universal integrated circuit card (eUICC), the request message including encryption key-related information on each of the at least one eUICC, generate the BPP based on the encryption key-related information, and control the transceiver to transmit, to the IFPP server, a response message including the BPP, wherein the encryption key-related information includes information associated with an algorithm used for generating a temporary key for each of the at least one eUICC, and wherein the BPP is installed in an eUICC of a corresponding terminal via the IFPP server.

### [Advantageous Effects of Invention]

According to an embodiment of the disclosure, a service may be effectively provided in a mobile communication system.

In addition, according to an example of the disclosure, a user is able to directly access a network through purchase of a terminal having a profile already installed therein, and thus convenience may be increased.

### [Brief Description of Drawings]

FIG. 1 is a diagram illustrating a relation between elements for provisioning a profile according to an example of the disclosure.
FIG. 2A is a diagram illustrating a method in which a profile server installs a corresponding BPP in an eUICC, based on a temporary key generation parameter according to a BPP request of a factory IT in an example of the disclosure.
FIG. 2B is a diagram illustrating a method in which a profile server installs a corresponding BPP in an eUICC according to a BPP request of a factory IT in an example of the disclosure.
FIG. 3A is a diagram illustrating a method in which a profile server installs a corresponding BPP in an eUICC, based on multiple temporary keys according to a BPP request of a factory IT in an example of the disclosure.
FIG. 3B is a diagram illustrating a method in which a profile server installs a corresponding BPP in an eUICC, based on multiple temporary keys according to a BPP request of a factory IT in an example of the disclosure.
FIG. 4A is a diagram illustrating a method in which when a factory IT requests an encrypted profile package (BPP) from a profile server, the profile server transfers a temporary key generation parameter and the factory IT receives a corresponding encrypted profile package and installs same in an eUICC according to an example of the disclosure.
FIG. 4B is a diagram illustrating a method in which when a factory IT requests an encrypted profile package (BPP) from a profile server, the profile server transfers a temporary key generation parameter and the factory IT receives a corresponding encrypted profile package and installs same in an eUICC according to an example of the disclosure.
FIG. 5 is a block diagram illustrating a structure of each of a profile server, a factory IT, and a terminal in a wireless communication system according to an embodiment of the disclosure.

### [Mode for the Invention]

Hereinafter, exemplary embodiments of the disclosure will be described in detail with reference to the accompanying drawings. It should be noted that, in the accompanying drawings, the same or like elements are designated by the same or like reference signs as much as possible. In addition, a detailed description of known functions or configurations that may make the subject matter of the disclosure unclear will be omitted.

In describing the embodiments, descriptions related to technical contents well-known in the relevant art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Also, the size of each element does not completely reflect the actual size. In the respective drawings, the same or corresponding elements are assigned the same reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card.

In the following description, a base station is an entity that allocates resources to terminals, and may be at least one of a Node B, a base station (BS), an eNode B, a gNode B, a wireless access unit, a base station controller, and a node on a network. A terminal may include a user equipment (UE), a mobile station (MS), a cellular phone, a smartphone, a computer, or a multimedia system capable of performing a communication function. Furthermore, the embodiments of the disclosure as described below may also be applied to other communication systems having similar technical backgrounds or channel types to the embodiments of the disclosure. Moreover, based on determinations by those skilled in the art, the embodiments of the disclosure may also be applied to other communication systems through some modifications without significantly departing from the scope of the disclosure. Examples of such communication systems may include 5th generation mobile communication technologies (5G, new radio, and NR) developed beyond LTE-A, and in the following description, the "5G" may be the concept that covers the exiting LTE, LTE-A, and other similar services. In addition, based on determinations by those skilled in the art, the disclosure may also be applied to other communication systems through some modifications without significantly departing from the scope of the disclosure.

In the following description, terms for identifying access nodes, terms referring to network entities or network functions, terms referring to messages, terms referring to interfaces between network entities, terms referring to various identification information, and the like are illustratively used for the sake of descriptive convenience. Therefore, the disclosure is not limited by the terms as described below, and other terms referring to subjects having equivalent technical meanings may also be used.

In the following description, some of terms and names defined in the 3rd generation partnership project (3GPP) long term evolution (LTE) standards and/or 3GPP new radio (NR) standards may be used for the sake of descriptive convenience. However, the disclosure is not limited by these terms and names, and may be applied in the same way to systems that conform other standards.

For convenience in the following description, the disclosure uses terms and names defined in remote SIM provisioning (RSP) specifications (SGP.XX series) that are standards defined by the global system for mobile communications association (GSM association, GSMA) among currently existing embedded subscriber identification module (eSIM) standards. However, the disclosure is not limited by the terms and names, and may be equally applied to eSIMs according to other specifications.

A universal integrated circuit card (UICC) is a smart card used by being inserted into a terminal, such as a mobile communication terminal, and is also referred to as a UICC card. The UICC may include an access control module for accessing a network of a mobile communication operator. The access control module includes, for example, a universal subscriber identity module (USIM), a subscriber identity module (SIM), and an Internet protocol (IP) multimedia service identity module (ISIM).

The disclosure is to provide a method and a device for installing profiles in an eUICC of a terminal in a manufacturer terminal factory environment in a wireless communication system.

In addition, the disclosure may provide a method and a device for effectively providing a result of processing profiles in a terminal manufacturer factory environment to one eUICC one or more times in a wireless communication system.

A UICC including a USIM is also commonly called a USIM card. Similarly, a UICC including a SIM module is also commonly called a SIM card. A SIM card described hereinafter may be interpreted to include a UICC card, a USIM card, and a UICC including an IP multimedia services identity module (ISIM). In addition, even if a SIM card is described hereinafter, it will be apparent to those skilled in the art that technical features related to the SIM card may be equally applied to a USIM card, an ISIM card, or a general UICC card.

A SIM card stores personal information of a mobile communication subscriber, and performs subscriber authentication and generation of a traffic security key at the time of access to a mobile communication network, so as to enable use of secure mobile communication.

A SIM card is generally manufactured as an exclusive card for a particular mobile communication operator in response to a request of the mobile communication operator. Authentication information for access to a network of the operator, for example, a USIM application and an international mobile subscriber identity (IMSI), a K value, and an OPc value are previously mounted in the card to be released. Therefore, the manufactured SIM card is received by the mobile communication operator and then provided to a subscriber. Thereafter, if it is necessary, the SIM card may also perform management, such as installation, modification, and removal of an application in a UICC, by using a technology like over the air (OTA).

A subscriber inserts a UICC card into an owned mobile communication terminal to use a network and an application service of a mobile communication operator. Additionally, when replacing the mobile communication terminal, the subscriber may move the UICC card from the existing mobile communication terminal to a new mobile communication terminal and insert the UICC card, so that the subscriber may use authentication information, a mobile communication phone number, and personal phonebook stored in the UICC card on the new mobile communication terminal without change.

However, a SIM card may cause inconvenience for a mobile communication terminal user when receiving a service from a different mobile carrier. For example, a mobile communication terminal user may face the inconvenience of having to physically obtain a SIM card to receive a service from a particular mobile communication operator. For example, when traveling to another country, in order to receive a local mobile communication service of the other country, there may be inconvenience in that a physical local SIM card needs to be obtained. A roaming service may somewhat ease the inconvenience, but also has a problem in that the roaming service costs a lot and is not available when there is no contract between the mobile carriers.

On the other hand, if a SIM module is remotely downloaded and installed onto a UICC card, these inconveniences may be significantly reduced. For example, a user may download a SIM module of a mobile communication service to be used onto a UICC card at a desired time point. In addition, a plurality of SIM modules may be downloaded and installed in such a UICC card, and only at least one of the SIM modules may be selected and used.

This type of UICC card may or may not be fixed to a terminal. In general, a UICC that is fixed to a terminal is referred to as an eUICC. In the disclosure, for convenience of explanation, a UICC card capable of remotely downloading and selecting a SIM module is referred to also as an eUICC. That is, in the disclosure, a UICC card fixed to a terminal and a UICC card not fixed to a terminal among UICC cards capable of remotely downloading and selecting a SIM module are collectively referred to as an eUICC.

Additionally, SIM module information that is downloaded may be collectively expressed by using the term "profile." Examples of profiles may be further categorized according to uses, such as a provisioning profile that is a profile (e.g., allowing only access to a profile server) restricted to a use such as connectivity for initial configuration, an operational profile that is a profile having no such use restrictions, and a test profile which is limited for testing. A provisioning profile may also be described by using the term "bootstrap profile."

To install a profile on an eUICC, it is generally assumed that after a terminal is shipped, a terminal user downloads the profile through a real-time network connection with a profile download server. Currently, according to remote profile provisioning standard specifications that are eSIM standardized specifications defined by GSMA, for example, SGP.21/22 that is a remote SIM provisioning standard for consumer terminals, SGP.31/32 that is a remote SIM provisioning standard for IoT terminals, and SGP.01/02 that is a remote SIM provisioning standard for M2M terminals, a terminal is defined to be connected to a profile download server through a network in real time and then perform a process in which the terminal and the profile server transmit and receive messages several times, and a process of downloading a profile after (common) mutual authentication in this process.

However, it is impossible to always assume a situation where the terminal and the profile download server are connected through a network at a time point of downloading a profile from the profile download server. In order to solve this issue, a provisioning profile that is a restricted-use profile having a purpose of providing only connectivity for initial configuration to a terminal has been introduced in SGP.21/22. As a result, a terminal manufacturer may ship eUICCs loaded with a provisioning profile. In addition, according to a contract with a service provider, it may also be possible that a manufacturer pre-installs the above operational profile of a mobile operator having no use restrictions in an eUICC before shipment.

Meanwhile, a new work item for provisioning a profile to a terminal in a factory has recently been approved by the GSMA, and standardization discussions on devices and methods for provisioning a profile to a terminal in a factory are to be conducted through SGP.41 (technical requirement specification) and SGP.42 (technical specification (planned)).

In the disclosure, a function for provisioning a profile in a factory is referred to as an in-factory profile provisioning (IFPP) function, and when a state of supporting the IFPP function is entered, it may be indicated as an IFPP state or entry into an IFPP mode. In addition, the letter "f" may be appended to the end of each entity's name to denote a state of operating in an IFPP mode. For example, a specific entity such as a terminal, a local profile assistant (LPA), an eUICC, a profile server, a factory IT, a service provider (SP, an operator, or a mobile operator) server, and an eUICC manufacturer (EUM) server may be an entity further supporting an IFPP mode, or an entity supporting only an IFPP function. For instance, subscription manager data preparation plus (SM-DP+), which is one type of profile server, may be a server that supports a consumer-oriented remote SIM provisioning function defined in SGP.21/22 but additionally supports a part of an IFPP function defined in SGP.41/42. Alternatively, SM-DP+, which is a profile server, may be a profile server that supports only an IFPP function. As described above, in the disclosure, for example, a profile server operating in an IFPP state may also be denoted as a profile server or an SM-DPf.

In the disclosure, a UICC is a smart card inserted and used in a mobile communication terminal, and may indicate a chip which stores personal information, such as network access authentication information, a phonebook, and a short message service (SMS) of a mobile communication subscriber, so that at the time of access to a mobile communication system such as GSM, wideband code division multiple access (WCDMA), long term evolution (LTE), and 5th generation (5g), the chip performs subscriber authentication and generation of a traffic security key, so as to enable use of secure mobile communication. Depending on the type of a mobile communication network accessed by a subscriber, a UICC may be loaded with communication applications such as SIM, USIM, and ISIM, and in addition, may provide a higher-level security function for installing various applications, such as an electronic wallet, ticketing, and an electronic passport.

In the disclosure, an eUICC is not limited to a security module embedded in a terminal, and may include an attachable/detachable security module that is insertable into and removable from a terminal. An eUICC may download and install a profile in real-time or non-real-time via a wired or wireless network. An eUICC may be referred to as a UICC capable of profile download and installation. In a case where an eUICC installs a profile in a factory environment where real-time communication with the outside is difficult, a device which wiredly or wirelessly injects the profile into the eUICC in a factory information technology (IT)/original equipment manufacturer (OEM) may be separately configured in an SM-DPf server having generated the profile.

In the disclosure, a method of downloading and installing a profile in an eUICC may also be applied to an attachable/detachable UICC that is insertable into and removable from a terminal, as described above. For example, an embodiment of the disclosure may be applied to an attachable/detachable UICC capable of downloading and installing a profile. In the disclosure, an eUICC unique identification number (eUICC ID) may be referred to as an EID. The UICC mentioned in the disclosure may be used interchangeably with a SIM, and the term eUICC may be used together with an eSIM.

In the disclosure, a profile may indicate a package obtained through packaging, in a form of software, an application, a file system, an authentication key value, etc., which are stored in a UICC. Additionally, a profile may be referred to as access information. Furthermore, a USIM profile in the disclosure may have the same meaning as a profile or may refer to a package obtained through packaging, in a form of software, information contained within a USIM application of a profile. In the disclosure, a profile package or an encrypted profile package (bound profile package (BPP)) may be used interchangeably with a profile or to denote a data object of a specific profile, and may be referred to as a profile tag, length, and value (TLV) or a profile package TLV. A profile identifier may be referred to as an integrated circuit card identifier (ICCID), which indicates a unique identification number of a profile. If a profile package is encrypted using an encryption parameter, the encrypted profile package may be referred to as a protected profile package (PPP) or protected profile package TLV (PPP TLV). If a profile package is encrypted using an encryption parameter that is decryptable by only a specific eUICC, the encrypted profile package may be referred to as a bound profile package (BPP) or bound profile package TLV (BPP TLV). A profile package TLV may indicate a data set that expresses information for configuring a profile in a TLV type.

In the disclosure, a profile server is a server that provides a function of generating a profile, encrypting a generated profile, storing a generated profile, generating a remote profile management instruction, or encrypting a generated remote profile management instruction, or provide an IFPP mode, and may include a subscription manager data preparation (SM-DP), a subscription manager data preparation plus (SM-DP+), or a subscription manager secure routing (SM-SR). As mentioned above, in the disclosure, a profile server operating by providing an IFPP function may be described as an SM-DPf.

The term "terminal" or "device" used in the disclosure may be called a mobile station (MS), a user equipment (UE), a mobile equipment (ME), a user terminal (UT), a wireless terminal, an access terminal (AT), a terminal, a subscriber unit, a subscriber station (SS), a wireless device, a wireless communication device, a wireless transmit/receive unit (WTRU), a mobile node, a mobile, or other terms. Various embodiments of a terminal may include a cellular phone, a smartphone having a wireless communication function, a personal portable terminal (PDA) having a wireless communication function, a wireless modem, a portable computer having a wireless communication function, an image capturing device such as a digital camera having a wireless communication function, a gaming device having a wireless communication function, a music storage and playback appliance having a wireless communication function, an Internet appliance capable of wireless Internet access and browsing, and portable units or terminals incorporating combinations of such functions. Additionally, depending on supported performance characteristics, a terminal may include a machine-to-machine (M2M) terminal, a machine-type communication (MTC) terminal/device, and an IoT terminal/device. In the disclosure, a terminal may also be referred to as an electronic device or simply a device. A terminal that provides a function of installing a profile on an eUICC may also be referred to as an eSIM terminal.

In the disclosure, an EUM refers to an eUICC manufacturer, which is a manufacturing company that produces an eUICC, personalizes same, and provides the personalized eUICC. Pieces of information transmitted by the EUM may be transmitted online or offline through a channel between an EUM server or a separate element. According to an embodiment of the disclosure, the EUM may refer to a role performed by the EUM or the EUM server.

In the disclosure, a terminal or a device may include software or an application installed within the terminal or device to control a UICC or eUICC. Such software or an application may be an application such as an LPA, a SIM manager, or an IoT profile assistant (IPA). Software or functions may also be integrated and provided. For instance, an LPA and an IPA may be provided as a single integrated application. In the disclosure, when software or an application installed in a terminal or device to control a UICC or an eUICC operates with an IFPP function, the software or application may be collectively referred to as a factory profile assistant (FPA) or an LPAf.

In the disclosure, an application protocol data unit (APDU) may be a message or a message format exchanged between a controller in a terminal or device and an eUICC. An APDU is a pair of a command and a response, and an APDU command and an APDU response are defined in ETSI 102.221, referencing ISO 7816. As defined in ETSI 102.221, an APDU command has a structure configured by a header of an APDU including a class of instruction (CLA), an instruction (INS), instruction parameter 1 (P1), and instruction parameter 2 (P2), and a body including the number (Lc) of bytes in a command data field, data, and the number (Le) of bytes expected in the response of the command. An APDU response has a structure configured by an optional data field, status byte 1 (SW1), and status byte 2 (SW2). A detailed description thereof may be referenced in the ETSI 102.221 specification. An application message transmitted by an LPA or a terminal may be transmitted to an eUICC in the form of an APDU, and transmitted information may be included and transmitted in data of the APDU.

In the disclosure, AKA may refer to authentication and key agreement and may represent an authentication algorithm used for accessing 3GPP and 3GPP2 networks. K is an encryption key value stored in an eUICC, which is used in an AKA authentication algorithm, and in the disclosure, OPc may be a parameter value that may be stored in an eUICC and is used in the AKA authentication algorithm.

In the disclosure, a network access application (NAA) refers to an application program of a network access application and may be an application program, such as a USIM or an ISIM, which is stored in a UICC for network access. For example, an NAA may be a network access module.

In the disclosure, an end user, a user, a subscriber, a service subscriber, and a user may be used together with a user of a terminal.

In the disclosure, a factory IT refers to a device that performs processing to provision specific data or configurations to a terminal in a manufacturing process, may refer to a module that includes a function of downloading a profile to a terminal, and may be a device that may further include a function of acquiring profiles from a profile server and storing same. The factory IT may be used interchangeably with a factory IT equipment, a factory IT server, a factory provisioning equipment, a factory server, an original equipment manufacturing (OEM) or a terminal manufacturer. Hereinafter, even if the factory IT is represented as a server, the factory IT in the disclosure may be configurable as one or more modules, such as a server that acquires data, collects, stores, or processes same, and then transfer same, and a terminal that is connected to an eSIM terminal and injects configurations or data thereto.

In the disclosure, an OEM may be used interchangeably with a terminal manufacturer or a manufacturer. In the disclosure, some of many devices of the OEM may wiredly or wirelessly be connected only inside the manufacturer and not allow external networks. For example, a data storage server used for a manufacturing process or communication devices that inject a profile into a terminal may not provide a network connection with the outside of the manufacturer and may be connected solely through an internal network. A profile storage server within the manufacturer may be a device identical or different from a server that replies with a profile BPP loading report to the outside. In the disclosure, a factory IT/OEM may be described as one or more devices which install a profile on a terminal in a manufacturer factory.

In the disclosure, a profile order ID is an identification ID for particular profile orders, and may be generated by a profile server vendor according to a profile order request of a mobile service provider or a mobile service provider itself, and be shared with a terminal manufacturer. The profile order ID is defined as a unique value between an MSP and an SM-DPf, and is presented by the terminal manufacturer to be usable as information enabling the SM-DPf to determine which order a profile requested by the terminal manufacturer is mapped to. The notation of the profile order ID may be represented, for example, as a combination of 0-9, A-Z, and "-" in hexadecimal. In the disclosure, a service provider (SP) may be interchangeably used with terms such as a mobile service provider (MSP) (mobile service operator), a mobile network operator (MNO), a mobile network provider, an operator, a carrier, or an (M)SP server, and according to an embodiment, the service provider may be described as meaning a server of the service provider or a role performed by the service provider.

In the disclosure, a server vendor refers to a vendor that operates a profile server and may mean a role performed by a profile server vendor.

In the disclosure, an encryption key is used in a sense to encompass both encryption and decryption keys. For example, an encryption key may include a private key used for encrypting data or a public key that decrypts same, and the public key may also be shared in the form of a certificate.

In the disclosure, otSK.EUICC.KA and otPK.EUICC.KA refer to a one-time secret key (otSK) of an eUICC and a one-time public key (otPK) of an eUICC, as defined in SGP.22, and KA may refer to key agreement. In the disclosure, a one-time encryption key pair or a one-time eUICC encryption key pair may refer to otSK.EUICC.KA and otPK.EUICC.KA. In addition, in the disclosure, a secret key is used interchangeably with a private key, and a public key is used interchangeably with a public key.

In the disclosure, a key material necessarily includes otPK.EUICC.KA, is eUICC information further including at least one of capability information such as an eUICC certificate chain or eUICC info, and may represent pieces of encryption key data information for one-time profile installation of a particular eUICC. In the key material, otPK.EUICC.KA may be transmitted as signed data of the eUICC. When otPK.EUICC.KA is transmitted as signed data of the eUICC, a profile server that generates a profile by using the data may need to verify the signed data by identifying whether the data has the same root-of-trust certificate. Hereinafter, in the description of the drawings, a key material may be used interchangeably with key information or encryption key information.

The disclosure is to propose a method and a device for inserting a profile into a terminal including an eUICC and shipping the terminal.

Due to the characteristics of factory environments, profile injection into terminals is needed in a process for a large number of terminals. However, it is difficult to perform a process of exchanging messages back and forth multiple times, including a procedure of real-time network connection and mutual authentication between a profile server and individual terminals. To overcome this issue, the disclosure is to provide a method and a device for processing profiles for a large number of terminals.

In addition, in this case, a real-time connection between a profile server and a terminal is not considered. Therefore, a method of transmitting, verifying, and installing a profile encryption key between a profile server (e.g., SM-DPf) and an eUICC in consideration of a "non-real-time characteristic" may be required. According to various embodiments of the disclosure, a terminal manufacturer may pre-install a large number of profiles on eSIM terminals and ship the terminals, without requiring a real-time connection with a profile server.

Additionally, according to various embodiments of the disclosure, a user is able to immediately connect to a network by purchasing a terminal with a pre-installed profile, and thus the inconvenience of the user having to go and find Wi-Fi or a mobile communication network to download a profile may be eliminated thereby enhancing the user's convenience.

Additionally, according to various embodiments of the disclosure, a mobile operator may provide a user with a terminal in which a provisioning profile for downloading the operator's profile or an operational profile that enables immediate use of the operator's network service is installed, whereby the user's convenience in using eSIM may be enhanced.

The following embodiments describe procedures of injecting a profile and performing shipment in a factory. However, in the following description, it should be noted that, at a specific time point after injecting profiles and performing shipment in a factory, a terminal user may provision and install a profile even in a general user environment outside the factory, following a procedure defined in SGP.21/22. That is, the following embodiments are intended to describe provisioning in the environment where installation is performed in a factory, but it is obvious that this does not mean that profile installation in a general environment after factory shipment is impossible.

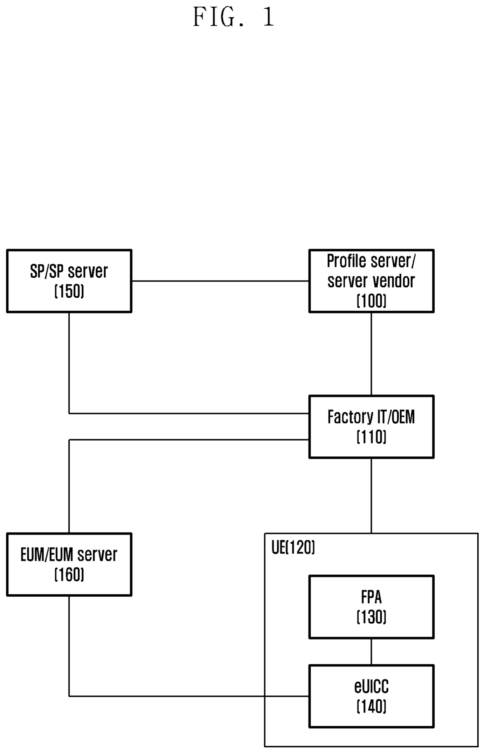

FIG. 1 is a diagram illustrating a relation between elements for supporting in-factory profile provisioning according to an embodiment of the disclosure.

Referring to FIG. 1, a profile server/server vendor (hereinafter, a profile server or a server vendor) 100 may support a function of generating a profile for IFPP, storing a profile generated for IFPP, or encrypting a profile generated for IFPP. In addition, the profile server/server vendor 100 may further support a function of generating a profile generally used in a field, as defined in SGP.22. In addition, the profile server/server vendor 100 may support a function of storing the generated profile. In addition, the profile server/server vendor 100 may provide a function of encrypting the generated profile. In addition, the profile server/server vendor 100 may include a function of generating a remote profile management instruction (remote profile management, RPM) or encrypting the generated remote profile management instruction. The profile server/server vendor 100 may support a function of transmitting a generated profile to an eSIM UE or another profile storage server. RPM may be collectively referred to as a series of procedures where profile installation, activation, deactivation, removal, and other functions are performed based on an instruction transmitted from the profile server/server vendor 100 to a UE 120. RPM may be requested by a mobile operator, a service provider, or a UE owner and be generated by the profile server/server vendor 100.

The profile server/server vendor 100 may receive a profile order request from a SP/SP server (hereinafter, an SP or SP server) 150 and determine whether the request is a request to generate a profile for IFPP. The profile server/server vendor 100 may combine profile order information received from a factory IT server/OEM (hereinafter, a factory IT, a factory server, or an OEM) 110 or the SP/SP server 150 with ordered EID information to map a profile to an EID, thereby preparing the mapped profile and EID in the profile server/server vendor 100.

The SP/SP server 150 may receive a profile order request from the factory IT server/OEM 110 and determine whether the request is an order request to provide profiles for IFPP. After the determination, the SP/SP server 150 may transmit an order for providing the profiles to the profile server/server vendor 100, enabling the profile server/server vendor 100 to provide one or more BPPs to the factory IT/OEM 110.

The UE 120 may include an eUICC 140 and a communication modem (not shown). The communication modem may be equipped with one or more baseband processors (basebands) for wireless communication. The communication model may be called a communication unit or a transceiver.

The UE 120 may receive a BPP(s) generated for IFPP from the factory IT/OEM 110, and provide a function of installing the BPP(s) on the eUICC 140. The UE 120 may transmit a BPP to the eUICC 140, and the BPP may be transmitted to the eUICC 140 via an FPA 130 or be transmitted to the eUICC 140 without passing through the FPA 130. Transmitted messages may include, together with a BPP, specifically, parameters included in or added to the BPP.

A method of transmitting, to the eUICC 140, a message related to installation of a BPP and pieces of encryption key information by using the FPA 130 may include, for example, a method of including the message in one or more messages starting with ES10x and transmitting the messages, but is not limited thereto. When transmitting, to the eUICC 140, a message related to installation of a BPP and pieces of encryption key information without passing through the FPA 130, the message may be transmitted as a body of data of an APDU such as STORE DATA.

Meanwhile, although one profile server/server vendor 100 is illustrated in FIG. 1, multiple profile servers/server vendors 100 may exist. The factory IT/OEM 110 may receive and store BPPs from the multiple profile servers/server vendors 100.

As described above, the FPA 130 may be eUICC control software or an application supporting an IFPP function. The FPA 130 may also be implemented as a logical function of the UE 120 or the eUICC 140. The FPA 130 may receive, from the factory IT/OEM 110, a profile and pieces of additional authentication information for authenticating the profile server/server vendor 100 and provide same to the eUICC 140.

The eUICC 140 may identify whether profile installation in the factory has been requested through one or more messages of ES10x received from the FPA 130 or a profile installation message received through an application or software for a factory configuration of the UE or the factory IT 110, and if it is determined that there has been a requested for profile installation, may determine to enter an IFPP mode. If the eUICC 140 does not support an IFPP function (e.g., the eUICC fails in understanding a corresponding received function), the eUICC 140 may return an error and terminate IFPP processing.

The eUICC 140 may process a request received via the FPA 130 and return the processed request. The eUICC 140 may obtain, from the UE 120, a profile and pieces of information for authentication of the profile server/server vendor 100, and decode the profile and process installation by using pre-stored information for authentication. The eUICC 140 may return a result of the installation to an element having transmitted the request, that is, a specific application of the UE or the FPA 130 of the UE. Additionally, the eUICC 140 may verify a signature of an element having signed a received message to verify the profile server/server vendor 100 having encrypted the profile or authenticate the profile server/server vendor 100 having transmitted the message. The eUICC 140 may include certificates (credentials) required by security domains of the eUICC 140, such as a certificate issuer's root public key for verifying a certificate of an SM-DPf that is the profile server/server vendor 100, an embedded UICC controlling authority security domain (ECASD) that is a space for storing a keyset of an eUICC manufacturer, or an eSIM operating platform. In addition, some of the functions of the FPA may be implemented in the eUICC 140.

The factory IT/OEM 110 may include UEs, such as one or more servers or PCs that are devices responsible for provisioning a profile to the UE in the factory. The factory IT/OEM 110 may obtain pieces of predetermined information on the eUICCs 140, including a one-time encryption key, from an EUM/EUM server (hereinafter, an EUM or an EUM server) 160, transmit all or part of the obtained information to the profile server/server vendor 100, or transmit information for mapping between a profile and an EID to be ordered, to the SP/SP server 150. The factory IT/OEM 110 may be a server that stores or manages a received BPP and encryption key information. The factory IT/OEM 110 may request a BPP(s) for injection in the factory from the profile server/server vendor 100, or obtain a BPP for installation in the eUICC 140 and pieces of data signed by the profile server/server vendor 100 from the profile server/server vendor 100 as a result of the BPP(s) request. The factory IT/OEM 110 may store the received BPPs and pieces of signed data in the factory IT/OEM 110. Among the received or stored BPPs, the factory IT/OEM 110 may select a BPP mapped to an EID of a target UE in which a profile is to be installed, and transmit the BPP to the mapped UE during a factory configuration process.

The factory IT/OEM 110 may refer to an operation performed by a UE manufacturer or a factory IT of the UE manufacturer as described above, and although the factory IT/OEM is represented as a single entity in the following drawings, the factory IT/OEM may be configured by multiple devices (e.g., UEs such as servers or PCs). Accordingly, it should be noted that, for example, a device of a factory IT/OEM 110 connected to the profile server/server vendor 100 and a device of the factory IT/OEM 110 connected to the eSIM UE 120 may be the same device or may be different devices. Some of pieces of information exchanged between the factory IT/OEM 110 and the profile server/server vendor 100, the SP server 150, and the EUM 160 may be shared between subjects performing roles (i.e., a UE manufacturer, a profile server operation vendor, a service provider, and an eUICC manufacturer) in different forms, such as online or offline channels (e.g., email transmission), rather than message transmission and reception through a server-to-server interface.

The eUICC manufacturer (EUM) 160 is an eUICC manufacturing company, and may inject pieces of key information for eUICC authentication or for eUICC eligibility verification into the eUICCs 140 to personalize same, and then provide the eUICCs 140 to the UE manufacturer. The EUM/EUM server 160 may provide pieces of predetermined information on the eUICCs 140 including a one-time encryption key to the factory IT/OEM 110. In addition, although not illustrated in the drawing, pieces of predetermined information on the eUICCs 140 including a one-time encryption key, may also be transmitted from the EUM/EUM server 160 to the profile server/server vendor 100 according to a request of the OEM 110.

The service provider (SP) 150 is an operator that provides a network service by using a profile as described above, and may order a profile(s) for an IFPP function from the profile server/server vendor 100 so as to enable the profile server/server vendor 100 to generate and prepare the ordered profiles. In addition, the SP 150 may generate a profile order ID and provide same to the profile server/server vendor 100 and the OEM 110.

The descriptions of the aforementioned element modules may apply to the roles and relationships of the modules depicted in the drawings described below. Additionally, among the aforementioned element modules, pieces of order information as information exchanged between the profile server/server vendor 100, the factory IT server/OEM 110, the EUM/EUM server 160, and the SP/SP server 150 may be transmitted in different forms such as email or interface linkage between servers of entities.

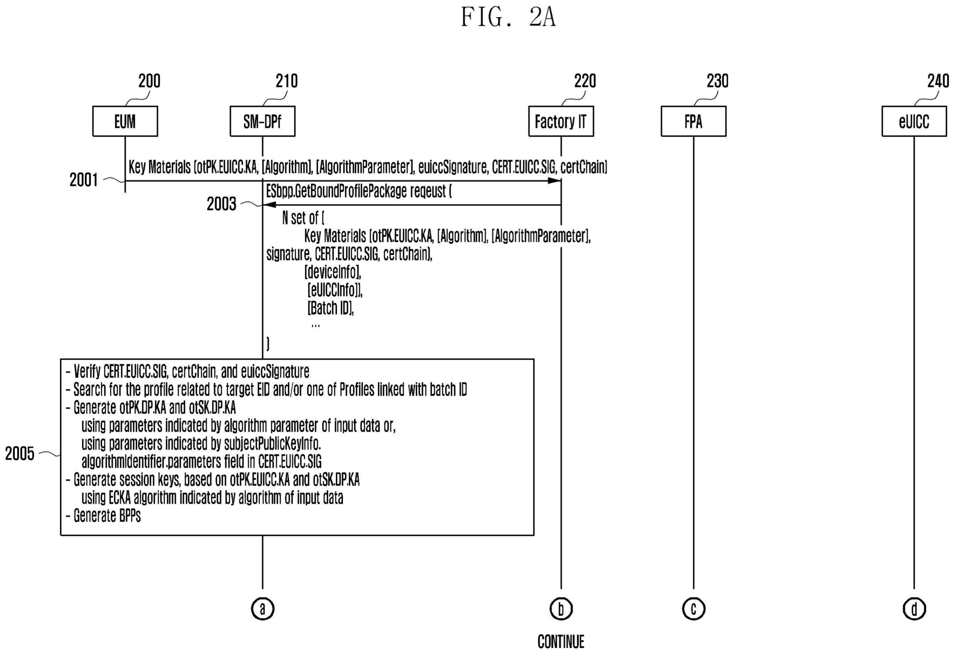

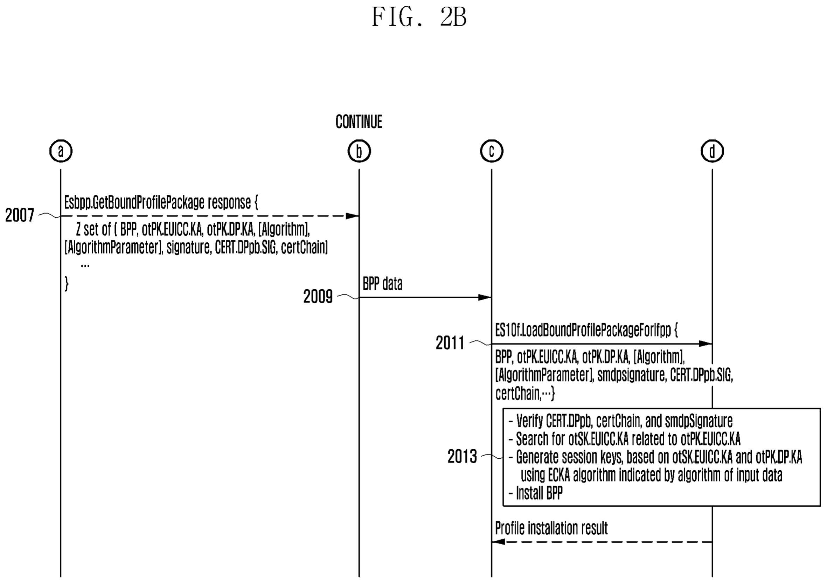

FIG. 2A and FIG. 2B are diagrams illustrating a method in which when a factory IT requests an encrypted profile package (BPP) from a profile server, the profile server transfers a temporary key generation parameter and the factory IT receives a corresponding encrypted profile package and installs same in an eUICC according to an example of the disclosure.

Referring to FIG. 2A, in operation 2001, an EUM 200 may provide encryption key-related information (key materials) including encryption key information on each of M eUICCs (where M may be a value of 1 or more) to a factory IT 220 according to an order of a UE manufacturer. In this case, predetermined information (key materials) including the encryption key information on each eUICC may include at least one of the following values.
- otPK.EUICC.KA: A public key among eUICC temporary keys for key agreement (one-time public key or ephemeral public key)
- Temporary key generation parameter (algorithm parameter): A parameter used for generation of the otPK.EUICC.KA and a corresponding otSK.EUICC.KA (a private key among eUICC temporary keys, one-time private key, or ephemeral private key). For example, the parameter may be NIST P-256, BrainpoolP256r1, FRP256V1, and SM2 Curve, and may be represented by a particular value or an object identifier (OID) indicating same.
- Session key generation algorithm (Algorithm): A key agreement algorithm supported by an eUICC. For example, this may be an elliptic curve key agreement algorithm.
- eUICC signature: An eUICC signature generated to include at least one of the above pieces of data. This is generated using a private key (SK.EUICC.SIG) corresponding to a public key (PK.EUICC.SIG) in an eUICC certificate below.
- eUICC certificate (CERT.EUICC.SIG): A certificate including a public key capable of verifying the eUICC signature.
- eUICC upper certificate chain: A certificate chain capable of verifying the eUICC certificate.

Thereafter, in operation 2003, the factory IT 220 may request an encrypted profile package (bound profile package, BPP) from a profile server 210. The request for the encrypted profile package may include encryption key-related information (key materials) on at least one eUICC among the pieces of predetermined information (key materials) including the encryption key information on each of the M eUICCs, which are received in operation 2001. The encryption key-related information on each of the at least one eUICC may include at least one of the following values.
- otPK.EUICC.KA: A public key among eUICC temporary keys for key agreement (one-time public key or ephemeral public key)
- Temporary key generation parameter (algorithm parameter): A parameter used for generation of the otPK.EUICC.KA and a corresponding otSK.EUICC.KA (a private key among eUICC temporary keys, one-time private key, or ephemeral private key). For example, the parameter may be NIST P-256, BrainpoolP256r1, FRP256V1, and SM2 Curve, and may be represented by a particular value or an object identifier (OID) indicating same.
- Session key generation algorithm (Algorithm): A key agreement algorithm supported by an eUICC. For example, this may be an elliptic curve key agreement algorithm.
- eUICC signature: An eUICC signature generated to include at least one of the above pieces of data. This is generated using a private key (SK.EUICC.SIG) corresponding to a public key (PK.EUICC.SIG) in an eUICC certificate below.
- eUICC certificate (CERT.EUICC.SIG): A certificate including a public key capable of verifying the eUICC signature.
- eUICC upper certificate chain: A certificate chain capable of verifying the eUICC certificate.

In addition, the encryption key-related information on each of the at least one eUICC may further include information (euiccInfo) of a corresponding eUICC, information (deviceInfo) of a UE in which the eUICC is installed, or encrypted profile package order information (batch order ID) shared between the factory IT 220 and the profile server 210.

In operation 2005, the profile server 210 may verify the requested information received in operation 2003, and generate an encrypted profile package, based on the verified information. The profile server 210 may verify an eUICC upper certificate and an eUICC certificate in the encryption key-related information on each of the at least one eUICC. For example, the verification of the eUICC upper certificate may be performed for encryption key-related information on each eUICC, or may be performed in an integrated manner when the encryption key-related information in the request has a common eUICC upper certificate. The profile server 210 may search for a profile related to encrypted profile package order information (batch order ID) or an eUICC identifier (EID) included in the eUICC certificate, and may prepare for generation of an encrypted profile package for the profile.

In addition, in operation 2005, the profile server 210 may generate a temporary key pair (otPK.DP.KA - a public key among profile server temporary keys and otSK.DP.KA - a private key among the profile server temporary keys) for encrypting the profile package. When the temporary key pair is generated, the profile server 210 may generate the temporary key pair by using the temporary key generation parameter (algorithm parameter) transferred from the factory IT 220 in operation 2003. If the temporary key generation parameter (algorithm parameter) is not transferred in operation 2003, the profile server 210 may generate the temporary key pair by using a temporary key generation parameter (subjectPublicKeyInfo.algorithmIdentifier.parameters) included in the eUICC certificate transferred in operation 2003. In addition, the profile server 210 may also generate the temporary key pair by using a temporary key generation parameter pre-agreed between the factory IT 220 and the profile server 210 before operation 2003.

If the profile server 210 is unable to generate a temporary key pair by using the temporary key generation parameter, the profile server 210 may generate an error and stop a process of generating an encrypted profile package for the eUICC. If the process of generating an encrypted profile package for the eUICC is stopped, the profile server 210 may repeat the above operations to perform a process of generating an encrypted profile package corresponding to an eUICC different from the eUICC for which the generation process is stopped among the at least one eUICCs requested by the factory IT 220.

In addition, in operation 2005, the profile server 210 may generate a session key by using otSK.DP.KA and otPK.EUICC.KA transferred in operation 2003. In this case, the profile server 210 may generate the session key by using the otPK.EUICC.KA and otSK.DP.KA through the session key generation algorithm transferred from the factory IT 220 in operation 2003. If the session key generation algorithm is not transferred in operation 2003, the profile server 210 may generate the session key by using the otPK.EUICC.KA and otSK.DP.KA through a pre-configured session key generation algorithm. If the profile server 210 is unable to generate a session key by using the otPK.EUICC.KA and otSK.DP.KA through the session key generation algorithm, the profile server 210 may generate an error and stop a process of generating an encrypted profile package for the eUICC. If the process of generating an encrypted profile package for the eUICC is stopped, the profile server 210 may repeat the above operations to perform a process of generating an encrypted profile package corresponding to an eUICC different from the eUICC for which the generation process is stopped among the at least one eUICCs requested by the factory IT 220.

In addition, in operation 2005, the profile server 210 may generate an encrypted profile package by using the session key. If the generation of an encrypted profile package for the eUICC is completed, the profile server 210 may repeat the above operations to perform a process of generating an encrypted profile package for an eUICC different from the eUICC for which the generation of the encrypted profile package is completed among the at least one eUICCs requested by the factory IT 220.

Referring to FIG. 2B, in operation 2007, the profile server 210 may transfer the generated encrypted profile package and predetermined relevant information to the factory IT 220. The encrypted profile package and the predetermined relevant information may include at least one of the following values.
- Encrypted profile package
- otPK.EUICC.KA having been used for generation of session key (public key among eUICC temporary keys)
- otPK.DP.KA having been used for generation of session key (public key among profile server temporary keys)
- Temporary key generation parameter having been used for generation of otPK.DP.KA (algorithm parameter)
- Session key generation algorithm having been used for generation of session key (algorithm)
- Profile server signature: A profile server signature generated to include at least one of the above pieces of data. This is generated using a private key (SK. DPpb.SIG or SK.DPauth.SIG) corresponding to a public key (PK.DPpb.SIG or PK.DPauth.SIG) in the following profile server certificate.
- Profile server certificate (CERT.DPpb.SIG or CERT.DPauth.SIG): A certificate including a public key capable of verifying the profile server signature
- Profile server upper certificate chain: A certificate chain capable of verifying the profile server certificate.

If there occurs an error in operation 2005 and thus the generation of an encrypted profile package for a particular eUICC is stopped, the encrypted profile package and predetermined relevant information may include error information on the eUICC instead of the encrypted profile package.

In operation 2009, the factory IT 220 may transfer an encrypted profile package to be installed in an eUICC 240 and predetermined relevant information to an FPA 230. Operation 2009 may also be performed between the factory IT 220 and the FPA 230 via a particular device, for example, a server, a computing device, or a mobile UE.

In operation 2011, the FPA 230 may transfer, to the eUICC 240, the encrypted profile package and predetermined information related thereto, and instruct the eUICC to install the encrypted profile package. The encrypted profile package and the predetermined relevant information may include at least one of the following values corresponding to the eUICC 230.
- Encrypted profile package
- otPK.EUICC.KA having been used for generation of session key (public key among eUICC temporary keys)
- otPK.DP.KA having been used for generation of session key (public key among profile server temporary keys)
- Temporary key generation parameter having been used for generation of otPK.DP.KA (algorithm parameter)
- Session key generation algorithm having been used for generation of session key (algorithm)
- Profile server signature: A profile server signature generated to include at least one of the above pieces of data. This is generated using a private key (SK. DPpb.SIG or SK.DPauth.SIG) corresponding to a public key (PK.DPpb.SIG or PK.DPauth.SIG) in the following profile server certificate.
- Profile server certificate (CERT.DPpb.SIG or CERT.DPauth.SIG): A certificate including a public key capable of verifying the profile server signature
- Profile server upper certificate chain: A certificate chain capable of verifying the profile server certificate.

In operation 2013, the eUICC 240 may verify the information in the request received in operation 2011, and install an encrypted profile package, based on the verified information. The eUICC 240 may verify a profile server upper certificate, a profile server certificate, and an eUICC signature.

In addition, in operation 2013, the eUICC 240 may search for otSK.EUICC.KA (a private key among eUICC temporary keys) corresponding to the provided otPK.EUICC.KA (a public key among the eUICC temporary keys) having been used for the generation of the session key. If the otPK.EUICC.KA or corresponding otSK.EUICC.KA is not present, the eUICC 240 may generate an error and stop an installation process. If the installation process is stopped, the eUICC 240 may generate a profile installation result including error content and transfer same to the FPA 230.

In addition, in operation 2013, when the temporary key generation parameter (algorithm parameter) having been used for the generation of the otPK.DP.KA is provided in operation 2011, the eUICC 240 may verify whether the otPK.EUICC.KA (a public key among the eUICC temporary keys) and the otSK.EUICC.KA (a private key among the eUICC temporary keys) corresponding thereto have been generated by the same temporary key generation parameter. If the otPK.EUICC.KA and the otSK.EUICC.KA have not been generated using the same parameter, the eUICC 240 may generate an error and stop the installation process. If the installation process is stopped, the eUICC 240 may generate a profile installation result including error content and transfer same to the FPA 230.

In addition, in operation 2013, the eUICC 240 may generate a session key by using the otSK.EUICC.KA and otSK.DP.KA transferred in operation 2011. In this case, the eUICC 240 may generate the session key by using the otSK.DP.KA and otSK.EUICC.KA through the session key generation algorithm transferred in operation 2011. If the session key generation algorithm is not transferred in operation 2011, the eUICC 240 may generate the session key by using the otSK.DP.KA and otSK.EUICC.KA through a pre-configured session key generation algorithm. If the eUICC 240 is unable to generate a session key by using the otSK.DP.KA and otSK.EUICC.KA through the session key generation algorithm, the eUICC 240 may generate an error and stop the installation process. If the installation process is stopped, the eUICC 240 may generate a profile installation result including error content and transfer same to the FPA 230.

In addition, in operation 2013, the eUICC 240 may install an encrypted profile package by using the session key. If the installation of the profile package is completed, the eUICC 240 may generate a profile installation result and transfer same to the FPA 230.

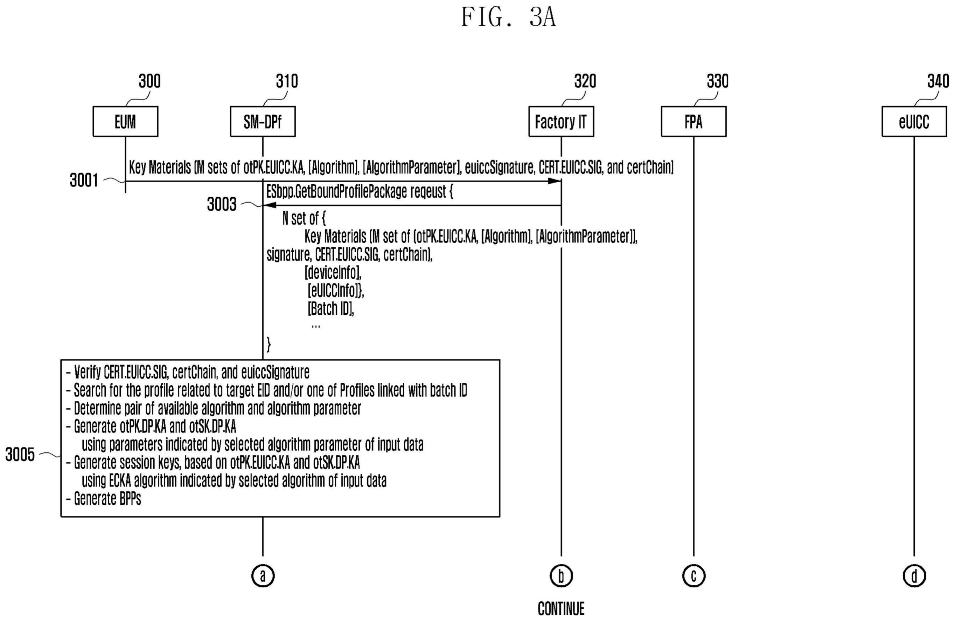

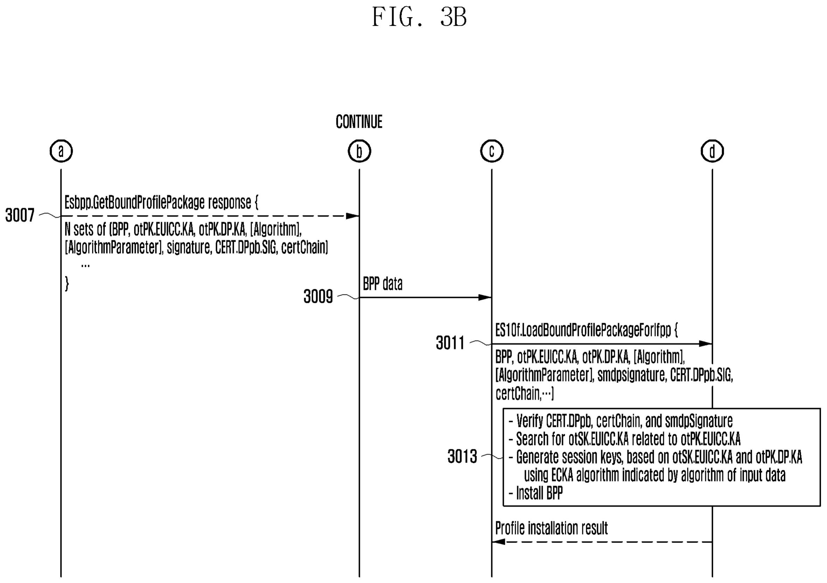

FIG. 3A and FIG. 3B are diagrams illustrating a method in which when a factory IT requests an encrypted profile package (BPP) from a profile server, the factory IT transfers multiple temporary keys and temporary key generation parameters, receives a corresponding encrypted profile package, and installs same in an eUICC according to an embodiment of the disclosure.

Referring to FIG. 3A, in operation 3001, an EUM 300 may provide encryption key-related information (key materials) including encryption key information on each of M eUICCs (where M may be a value of 1 or more) to a factory IT 320 according to an order of a UE manufacturer. In this case, predetermined information including the encryption key information on each eUICC may include at least one of the following values.
- At least one otPK.EUICC.KA: A public key among eUICC temporary keys for key agreement (one-time public key or ephemeral public key)
- Temporary key generation parameter (algorithm parameter): A parameter used for generation of each otPK.EUICC.KA and a corresponding otSK.EUICC.KA (a private key among eUICC temporary keys, one-time private key, or ephemeral private key). For example, the parameter may be NIST P-256, BrainpoolP256r1, FRP256V1, and SM2 Curve, and may be represented by a particular value or an object identifier (OID) indicating same. In this embodiment, if at least one otPK.EUICC.KA is included, a parameter having been used for generation of each otPK.EUICC.KA and a corresponding otSK.EUICC.KA is included.
- Session key generation algorithm (Algorithm): A key agreement algorithm supported by an eUICC. For example, this may be an elliptic curve key agreement algorithm. There may be one or more session key generation algorithms.
- eUICC signature: An eUICC signature generated to include at least one of the above pieces of data. This is generated using a private key (SK.EUICC.SIG) corresponding to a public key (PK.EUICC.SIG) in an eUICC certificate below.
- eUICC certificate (CERT.EUICC.SIG): A certificate including a public key capable of verifying the eUICC signature.
- eUICC upper certificate chain: A certificate chain capable of verifying the eUICC certificate.

In operation 3003, the factory IT 320 may request an encrypted profile package (BPP) from a profile server 310. The request for the encrypted profile package may include encryption key-related information (key materials) on at least one eUICC among the pieces of predetermined information (key materials) including the encryption key information on each of the eUICCs, which are received in operation 3001. The encryption key-related information on each of the at least one eUICC may include at least one of the following values.
- At least one otPK.EUICC.KA: A public key among eUICC temporary keys for key agreement (one-time public key or ephemeral public key)
- Temporary key generation parameter (algorithm parameter): A parameter used for generation of each otPK.EUICC.KA and a corresponding otSK.EUICC.KA (a private key among eUICC temporary keys, one-time private key, or ephemeral private key). For example, the parameter may be NIST P-256, BrainpoolP256r1, FRP256V1, and SM2 Curve, and may be represented by a particular value or an object identifier (OID) indicating same. In this embodiment, if at least one otPK.EUICC.KA is included, a parameter having been used for generation of each otPK.EUICC.KA and a corresponding otSK.EUICC.KA is included.
- Session key generation algorithm (Algorithm): A key agreement algorithm supported by an eUICC. For example, this may be an elliptic curve key agreement algorithm. There may be one or more session key generation algorithms.
- eUICC signature: An eUICC signature generated to include at least one of the above pieces of data. This is generated using a private key (SK.EUICC.SIG) corresponding to a public key (PK.EUICC.SIG) in an eUICC certificate below.
- eUICC certificate (CERT.EUICC.SIG): A certificate including a public key capable of verifying the eUICC signature.
- eUICC upper certificate chain: A certificate chain capable of verifying the eUICC certificate.

In addition, the encryption key-related information on each of the at least one eUICC may further include information (euiccInfo) of a corresponding eUICC, information (deviceInfo) of a UE in which the eUICC is installed, or encrypted profile package order information (batch order ID) shared between the factory IT 220 and the profile server 310.

In operation 3005, the profile server 310 may verify the information in the request received in operation 3003, and generate an encrypted profile package, based on the verified information. The profile server 310 may verify an eUICC upper certificate and an eUICC certificate in the encryption key-related information on each of the at least one eUICC. For example, the verification of the eUICC upper certificate may be performed for encryption key-related information on each eUICC, or may be performed in an integrated manner when the encryption key-related information in the request has a common eUICC upper certificate. The profile server 30 may search for a profile related to encrypted profile package order information (batch order ID) or an eUICC identifier (EID) included in the eUICC certificate, and may prepare for generation of an encrypted profile package for the profile.

In addition, in operation 3005, the profile server 310 may generate a temporary key pair (otPK.DP.KA - a public key among profile server temporary keys and otSK.DP.KA - a private key among the profile server temporary keys) for encrypting the profile package. When the temporary key pair is generated, the profile server 310 may generate the temporary key pair by using one parameter supported by the profile server 310 among multiple temporary key generation parameters (algorithm parameters) transferred from the factory IT 320 in operation 3003. If no temporary key generation parameter is transferred in operation 3003, the profile server 310 may generate the temporary key pair by using a temporary key generation parameter (subjectPublicKeyInfo.algorithmIdentifier. parameters) included in the eUICC certificate transferred in operation 3003. In addition, the profile server 310 may also generate the temporary key pair by using a temporary key generation parameter pre-agreed between the factory IT 320 and the profile server 310 before operation 3003.

If the profile server 310 is unable to generate a temporary key pair by using the temporary key generation parameter, the profile server 310 may generate an error and stop a process of generating an encrypted profile package for the eUICC. If the process of generating an encrypted profile package for the eUICC is stopped, the profile server 310 may repeat the above operations to perform a process of generating an encrypted profile package corresponding to an eUICC different from the eUICC for which the generation process is stopped among the at least one eUICCs requested by the factory IT 320.

In addition, in operation 3005, the profile server 310 may generate a session key by using otSK.DP.KA and otPK.EUICC.KA transferred in operation 3003. In this case, the profile server 310 may generate the session key by using the otPK.EUICC.KA and otSK.DP.KA through an algorithm supported by the profile server 310 among session key generation algorithms transferred from the factory IT 320 in operation 3003. If no session key generation algorithm is transferred in operation 3003, the profile server 310 may generate the session key by using the otPK.EUICC.KA and otSK.DP.KA through a pre-configured session key generation algorithm. If the profile server 310 is unable to generate a session key by using the otPK.EUICC.KA and otSK.DP.KA through the session key generation algorithm, the profile server 310 may generate an error and stop a process of generating an encrypted profile package for the eUICC. If the process of generating an encrypted profile package for the eUICC is stopped, the profile server 310 may repeat the above operations to perform a process of generating an encrypted profile package corresponding to an eUICC different from the eUICC for which the generation process is stopped among the at least one eUICCs requested by the factory IT 320.

In addition, in operation 3005, the profile server 310 may generate an encrypted profile package by using the session key. If the generation of an encrypted profile package for the eUICC is completed, the profile server 310 may repeat the above operations to perform a process of generating an encrypted profile package corresponding to an eUICC different from the eUICC for which the generation process is completed among the at least one eUICCs requested by the factory IT 320.

Referring to FIG. 3B, in operation 3007, the profile server 310 may transfer the generated encrypted profile package and predetermined relevant information to the factory IT 320. The encrypted profile package and the predetermined relevant information may include at least one of the following values.
- Encrypted profile package
- otPK.EUICC.KA having been used for generation of session key (public key among eUICC temporary keys)
- otPK.DP.KA having been used for generation of session key (public key among profile server temporary keys)
- Temporary key generation parameter having been used for generation of otPK.DP.KA (algorithm parameter)
- Session key generation algorithm having been used for generation of session key (algorithm)
- Profile server signature: A profile server signature generated to include at least one of the above pieces of data. This is generated using a private key (SK. DPpb.SIG or SK.DPauth.SIG) corresponding to a public key (PK.DPpb.SIG or PK.DPauth.SIG) in the following profile server certificate.
- Profile server certificate (CERT.DPpb.SIG or CERT.DPauth.SIG): A certificate including a public key capable of verifying the profile server signature
- Profile server upper certificate chain: A certificate chain capable of verifying the profile server certificate.

If there occurs an error in operation 3005 and thus the generation of an encrypted profile package for a particular eUICC is stopped, the encrypted profile package and predetermined relevant information may include error information on the eUICC instead of the encrypted profile package.

In operation 3009, the factory IT 320 may transfer an encrypted profile package to be installed in an eUICC 340 and predetermined relevant information to an FPA 330. Operation 3009 may also be performed between the factory IT 220 and the FPA 230 via a particular device, for example, a server, a computing device, or a mobile UE.

In operation 3011, the FPA 330 may transfer, to the eUICC 340, the encrypted profile package and predetermined relevant information, and instruct the eUICC to install the encrypted profile package. The encrypted profile package and the predetermined relevant information may include at least one of the following values corresponding to the eUICC 330.
- Encrypted profile package
- otPK.EUICC.KA having been used for generation of session key (public key among eUICC temporary keys)
- otPK.DP.KA having been used for generation of session key (public key among profile server temporary keys)
- Temporary key generation parameter having been used for generation of otPK.DP.KA (algorithm parameter)
- Session key generation algorithm having been used for generation of session key (algorithm)
- Profile server signature: A profile server signature generated to include at least one of the above pieces of data. This is generated using a private key (SK. DPpb.SIG or SK.DPauth.SIG) corresponding to a public key (PK.DPpb.SIG or PK.DPauth.SIG) in the following profile server certificate.
- Profile server certificate (CERT.DPpb.SIG or CERT.DPauth.SIG): A certificate including a public key capable of verifying the profile server signature
- Profile server upper certificate chain: A certificate chain capable of verifying the profile server certificate.

In operation 3013, the eUICC 340 may verify the information in the request received in operation 3011, and install an encrypted profile package, based on the verified information. The eUICC 340 may verify a profile server upper certificate, a profile server certificate, and an eUICC signature.

In addition, in operation 3013, the eUICC 340 may search for otSK.EUICC.KA (a private key among eUICC temporary keys) corresponding to the provided otPK.EUICC.KA (a public key among the eUICC temporary keys) having been used for the generation of the session key. If the otPK.EUICC.KA or corresponding otSK.EUICC.KA is not present, the eUICC 340 may generate an error and stop an installation process. If the installation process is stopped, the eUICC 340 may generate a profile installation result including error content and transfer same to the FPA 230.

In addition, in operation 3013, when the temporary key generation parameter (algorithm parameter) having been used for the generation of the otPK.DP.KA is provided in operation 3011, the eUICC 340 may verify whether the otPK.EUICC.KA (a public key among the eUICC temporary keys) and the otSK.EUICC.KA (a private key among the eUICC temporary keys) corresponding thereto have been generated by the same temporary key generation parameter. If the otPK.EUICC.KA and the otSK.EUICC.KA have not been generated using the same parameter, the eUICC 340 may generate an error and stop the installation process. If the installation process is stopped, the eUICC 340 may generate a profile installation result including error content and transfer same to the FPA 330.

In addition, in operation 3013, the eUICC 340 may generate a session key by using the otSK.EUICC.KA and otSK.DP.KA transferred in operation 3011. In this case, the eUICC 340 may generate the session key by using the otSK.DP.KA and otSK.EUICC.KA through the session key generation algorithm transferred in operation 3011. If the session key generation algorithm is not transferred in operation 3011, the eUICC 340 may generate the session key by using the otSK.DP.KA and otSK.EUICC.KA through a pre-configured session key generation algorithm. If the eUICC 340 is unable to generate a session key by using the otSK.DP.KA and otSK.EUICC.KA through the session key generation algorithm, the eUICC 340 may generate an error and stop the installation process. If the installation process is stopped, the eUICC 340 may generate a profile installation result including error content and transfer same to the FPA 330.

In addition, in operation 3013, the eUICC 340 may install an encrypted profile package by using the session key. If the installation of the encrypted profile package is completed, the eUICC 340 may generate a profile installation result and transfer same to the FPA 330.

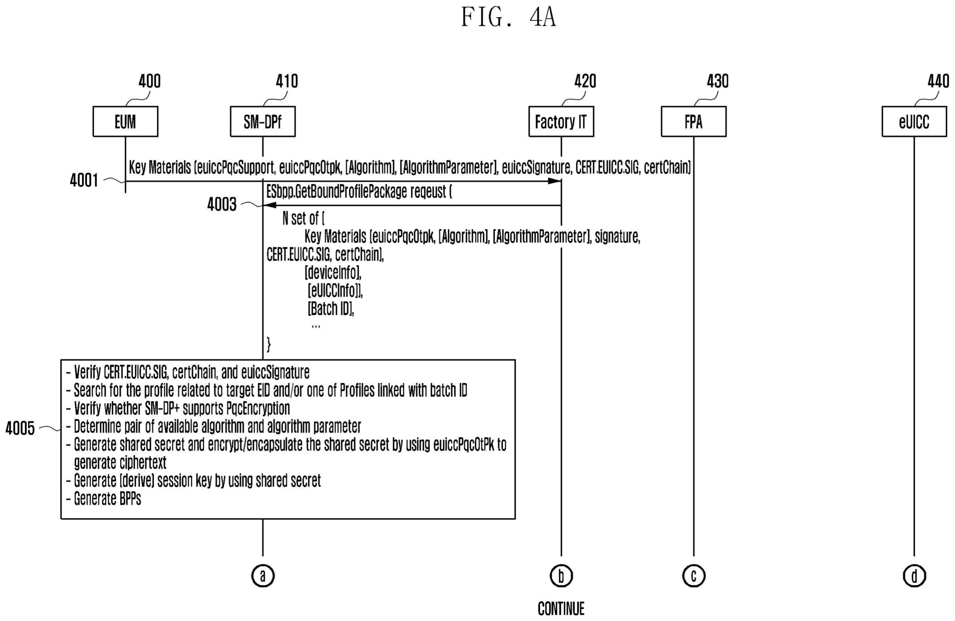

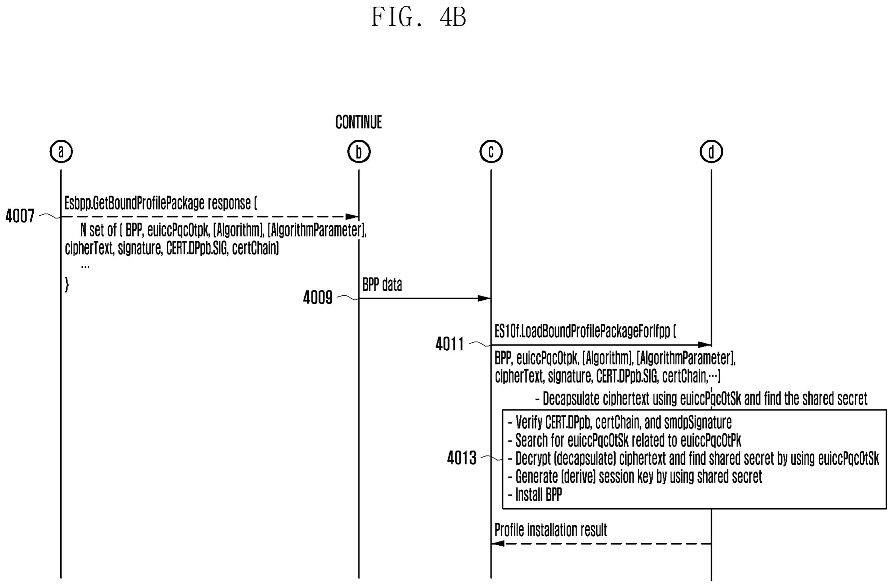

FIG. 4A and FIG. 4B are diagrams illustrating a method in which when a factory IT requests an encrypted profile package (BPP) from a profile server, the profile server transfers a temporary key generation parameter and the factory IT receives a corresponding encrypted profile package and installs same in an eUICC according to an example of the disclosure.

Referring to FIG. 4A, in operation 4001, an EUM 400 may provide encryption key-related information (key materials) including encryption key information on each of M eUICCs (where M may be a value of 1 or more) to a factory IT 420 according to an order of a UE manufacturer. In this case, predetermined information (key materials) including the encryption key information on each eUICC may include at least one of the following values.
- euiccPqcSupport: Information indicating that an eUICC 440 provides a function related to post-quantum cryptography
- euiccPqcOtPk: A temporary post-quantum cryptographic eUICC public key to be used for key encryption (key exchange), session key establishment (key establishment), key encapsulation mechanism (KEM), and key agreement protocol using post-quantum cryptography. The post-quantum cryptographic eUICC public key may be generated using the following key generation parameter and key generation algorithm, and the key encapsulation mechanism may include a scheme such as a module-lattice-based key-encapsulation mechanism, Crystal-Kyber, and the like.
- Temporary key generation parameter (algorithm parameter): One or more parameters used in a post-quantum cryptography scheme.
- Session key generation algorithm (algorithm): One or more post-quantum cryptography schemes supported by the eUICC (e.g., ML-KEM, ML-DSA, Crystal-Kyber, Crystal-Dilithium, FALCON, SPHINCS+, etc.)
- eUICC signature: An eUICC signature generated to include at least one of the above pieces of data. This is generated using a private key (SK.EUICC.SIG) corresponding to a public key (PK.EUICC.SIG) in an eUICC certificate below.
- eUICC certificate (CERT.EUICC.SIG): A certificate including a public key capable of verifying the eUICC signature.
- eUICC upper certificate chain: A certificate chain capable of verifying the eUICC certificate.

Thereafter, in operation 4003, the factory IT 420 may request an encrypted profile package (bound profile package, BPP) from a profile server 410. The request for the encrypted profile package may include encryption key-related information (key materials) on at least one eUICC among the pieces of predetermined information (key materials) including the encryption key information on each of the M eUICCs, which are received in operation 4001. The encryption key-related information on each of the at least one eUICC may include at least one of the following values.
- euiccPqcOtpk
- Temporary key generation parameter (algorithm parameter)
- Session key generation algorithm (algorithm)
- eUICC signature
- eUICC certificate (CERT.EUICC.SIG)
- eUICC upper certificate chain

In addition, the encryption key-related information on each of the at least one eUICC may further include information (euiccInfo) of a corresponding eUICC, information (deviceInfo) of a UE in which the eUICC is installed, or encrypted profile package order information (batch order ID) shared between the factory IT 520 and the profile server 410.

In operation 4005, the profile server 410 may verify the information in the request received in operation 4003, and generate an encrypted profile package, based on the verified information. The profile server 410 may verify an eUICC upper certificate and an eUICC certificate in the encryption key-related information on each of the at least one eUICC. For example, the verification of the eUICC upper certificate may be performed for encryption key-related information on each eUICC, or may be performed in an integrated manner when the encryption key-related information in the request has a common eUICC upper certificate. The profile server 410 may search for a profile related to encrypted profile package order information (batch order ID) or an eUICC identifier (EID) included in the eUICC certificate, and may prepare for generation of an encrypted profile package for the profile.

In addition, in operation 4005, the profile server 410 may select a pair of a temporary key generation parameter and a session key generation algorithm supportable by the profile server in information indicated in the temporary key generation parameter and the session key generation algorithm of the eUICC transferred in operation 4003. In addition, the profile server may perform key encryption (key encapsulation) by using a post-quantum cryptographic eUICC public key corresponding to the selected pair. The key encryption may be performed by using, as an input value, the post-quantum cryptographic eUICC public key (euiccPqcOtPk) for an ML-KEM.Encaps() function. The profile server 410 may generate ciphertext and a shared secret or a shared secret key as a result of a process of the key encryption. In addition, the shared secret or shared secret key may be generated using the post-quantum cryptographic eUICC public key. In addition, the key encryption may include a process of performing encryption using a profile post-quantum cryptographic eUICC public key to generate ciphertext.

In addition, in operation 4005, the profile server 410 may generate a session key by using the shared secret or shared secret key. Then, the profile server 410 may generate an encrypted profile package by using the session key.

Referring to FIG. 4B, in operation 4007, the profile server 410 may transfer the generated encrypted profile package and predetermined relevant information to the factory IT 420. The encrypted profile package and the predetermined relevant information may include at least one of the following values.
- Encrypted profile package
- euiccPqcOtpk having been used for key encryption
- Ciphertext
- Temporary key generation parameter (algorithm parameter)
- Session key generation algorithm (algorithm)
- Profile server signature: A profile server signature generated to include at least one of the above pieces of data. This is generated using a private key (SK. DPpb.SIG or SK.DPauth.SIG) corresponding to a public key (PK.DPpb.SIG or PK.DPauth.SIG) in the following profile server certificate.
- Profile server certificate (CERT.DPpb.SIG or CERT.DPauth.SIG): A certificate including a public key capable of verifying the profile server signature
- Profile server upper certificate chain: A certificate chain capable of verifying the profile server certificate.

In operation 4009, the factory IT 420 may transfer an encrypted profile package to be installed in the eUICC 440 and predetermined relevant information to an FPA 430. Operation 4009 may also be performed between the factory IT 420 and the FPA 430 via a particular device, for example, a server, a computing device, or a mobile UE.

In operation 4011, the FPA 430 may transfer, to the eUICC 440, the encrypted profile package and predetermined information related thereto, and instruct the eUICC to install the encrypted profile package. The encrypted profile package and the predetermined relevant information may include at least one of the following values corresponding to the eUICC 430.
- Encrypted profile package
- euiccPqcOtpk having been used for key encryption
- Ciphertext
- Temporary key generation parameter (algorithm parameter)
- Session key generation algorithm (algorithm)
- Profile server signature: A profile server signature generated to include at least one of the above pieces of data. This is generated using a private key (SK. DPpb.SIG or SK.DPauth.SIG) corresponding to a public key (PK.DPpb.SIG or PK.DPauth.SIG) in the following profile server certificate.
- Profile server certificate (CERT.DPpb.SIG or CERT.DPauth.SIG): A certificate including a public key capable of verifying the profile server signature
- Profile server upper certificate chain: A certificate chain capable of verifying the profile server certificate.

In operation 4013, the eUICC 440 may verify the information in the request received in operation 4011, and install an encrypted profile package, based on the verified information. The eUICC 440 may verify a profile server upper certificate, a profile server certificate, and an eUICC signature.

In addition, in operation 4013, the eUICC 440 may search for euiccPqcOtsk (temporary post-quantum cryptographic eUICC private key) corresponding to the provided euiccPqcOtpk having been used for generation of the ciphertext. If the euiccPqcOtpk or corresponding euiccPqcOtsk is not present, the eUICC 440 may generate an error and stop an installation process. If the installation process is stopped, the eUICC 440 may generate a profile installation result including error content and transfer same to the FPA 430.

In addition, in operation 4013, the eUICC 440 may perform key decryption (key decapsulation) that obtains a shared secret key by decrypting the transferred cyphertext. The key decryption may use an ML-KEM.Decaps() function. The eUICC 440 may generate a shared secret or a shared secret key as a result of a process of the key decryption. In addition, the key decryption may be performed using, as input values, a temporary post-quantum cryptographic UE private key (euiccPqcOtSk) that is paired with the temporary post-quantum cryptographic UE public key (euiccPqcOtpk) transferred by the profile server 410 in operation 4009, and the ciphertext transferred from the profile server 410. The key decryption may include a process of obtaining, by the eUICC 440, information for generating the same shared secret as that of the profile server 410 by decrypting the ciphertext by using the temporary post-quantum cryptographic UE private key.

In addition, the eUICC 440 may generate a session key by using the shared secret or shared secret key. In addition, the eUICC 440 may install an encrypted profile package by using the session key. If the installation of the profile package is completed, the eUICC 440 may generate a profile installation result and transfer same to the FPA 430.

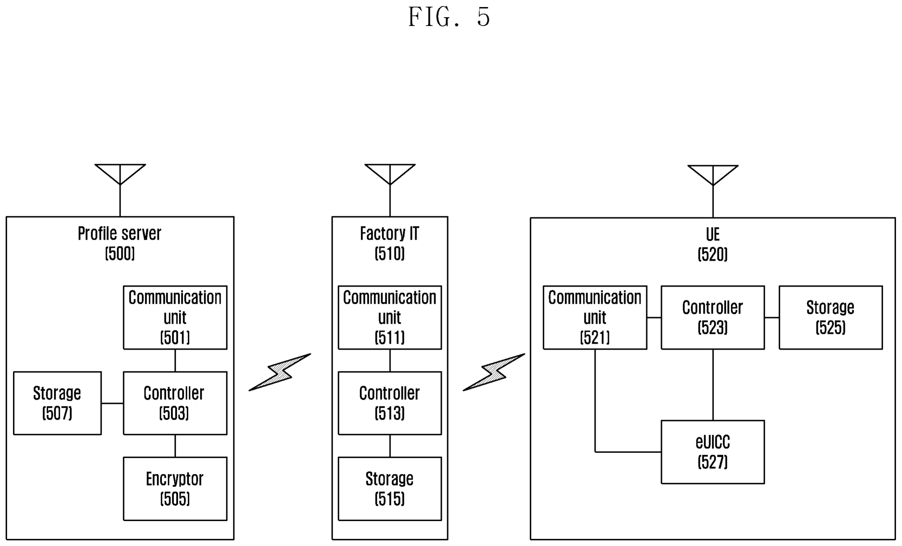

FIG. 5 is a block diagram illustrating respective structures of a profile server, a factory IT, and a UE in a wireless communication system according to an embodiment of the disclosure.

Referring to FIG. 5, a profile server 500 according to an embodiment of the disclosure may include a communication unit 501, a controller 503, an encryptor 505, and a storage 507. The controller 503 may be configured by at least one processor.

The communication unit 501 may transmit data to or receive data from other devices. The communication unit 501 may transmit or receive an encrypted key, an encrypted profile, and the like. To this end, the communication unit 501 may include at least one communication module and an antenna.

The controller 503 may control each element of the profile server 500 for profile installation according to the disclosure. For example, specific operations of the controller 503 is the same as in the embodiments described above or is the same as described below. According to an embodiment, the controller 503 of the profile server 500 may determine whether orders are the same order by referring to information received from a service provider server, a manufacturer server, or a service provider and a manufacturer, and control a profile and eUICC provision information related to the same order to be mapped and stored in the storage 507. Additionally, the controller 503 may control the overall operation to prepare a profile in advance by mapping the profile to a specific EID by referring to EID information received from the service provider. According to another embodiment, the controller 503 may determine whether to prepare a profile for IFPP by using information obtained from a message received through the communication unit 501, and perform control to execute an operation for entering a profile preparation operation.

According to another embodiment, the controller 503 may control the overall operation of the profile server 500 which is described in various embodiments of the disclosure.

According to another embodiment, the profile server 500 may, in a preliminary process for preparing and providing an encrypted profile package, receive a message from a factory IT through the communication unit 501, determine whether downloading of a profile for IFPP has been requested through the received message, process an operation to prepare profiles for factory use, and then control a processing result to be transmitted to the factory IT through the communication unit 501. The encryptor 505 may generate a bound profile package by encrypting a profile under the control of the controller 503 and then provide the package to the controller 503. The entirety or a part of information received through the communication unit 501, for example, a profile order ID received from an SP/SP server (not illustrated) and eUICC certificate chain information received from the factory IT 510 may be stored in the storage 507 so as to be used to verify a BPP loading report.

The encryptor 505 may include a hardware security module (HSM) or be named an HSM itself and may perform encryption and decryption of a profile without exposing an encryption key. Depending on an implementation, the encryptor 505 may be embedded in the controller 503 or implemented as a software code form executed by the controller 503.

A factory IT 510 according to an embodiment of the disclosure may include a communication device 511, a controller 513, and a storage 515. The factory IT 510 may also be configured by a combination of multiple devices each including one or more of a communication unit, a controller, and a storage. If multiple devices are connected to each other, each device for connection may be implemented to include a communication unit, or a device for centrally controlling the devices in an integrated manner may also be included. The factory IT 510 may also be configured by one or more devices, as described above. Reference is additionally made to the description of FIG. 1 in this regard.

In addition, according to an embodiment of the disclosure, the communication unit 511 may transmit or receive an encrypted key, an encrypted profile, and the like. To this end, the communication device 511 may include at least one communication module and an antenna. According to an embodiment of the disclosure, the storage 515 and the communication unit 511 may be integrated into a single device and provided for the factory IT 510 itself. The factory IT 510 may transmit encrypted key information to the profile server 500 through the communication unit 511 providing a wireless communication connection, or receive at least one of encrypted profiles from the profile server 500.

In addition, according to an embodiment of the disclosure, the factory IT 510 may transmit an encrypted profile stored through the communication unit 511 to a UE 520.

In addition, according to an embodiment of the disclosure, the controller 530 of the factory IT 510 may control a profile received from the profile server 500 through the communication unit 511 or an encrypted key previously obtained from an EUM (not illustrated), to be stored in the storage 513 or transmit the profile or key to a device in the factory IT 510, which is to be responsible for profile injection, through the communication unit 511, and control the profile or key to be transmitted from the communication unit 511 of the device in the factory IT 510, which is responsible for profile injection, to the UE 510 by wired or wirelessly.

In addition, according to an embodiment of the disclosure, the storage 515 of the factory IT 510 may store at least one encrypted profile or encrypted key information on a single encrypted profile. The storage 515 may include a storage medium of at least one type among a hard disk type, random access memory (RAM), static random access memory (SRAM), read-only memory (ROM), electrically erasable programmable read-only memory (EEPROM), programmable read-only memory (PROM), magnetic memory, magnetic disk, or optical disk. In addition, according to an embodiment of the disclosure, the factory IT 510 may be configured by multiple devices as described above, and if the factory IT is configured by multiple devices, the communication unit may provide a communication service limited to access to an external network of a manufacturer or access to an internal network of the manufacturer.

In addition, according to an embodiment of the disclosure, the controller 513 may include at least one processor. The controller 513 may control an operation of the factory IT 510 according to various embodiments of the disclosure.

The UE 520 according to an example of the disclosure may include a communication unit 521, a controller 523, a storage 525, and an eUICC 527. The eUICC 527 may be attachable or detachable as described above, but is illustrated in FIG. 5 as a part of the UE 520 in consideration of a case where the eUICC is fixed to the UE in a non-detachable manner and is shipped. The communication unit 521 may transmit data to or receive data from other devices. For example, the communication unit 521 may receive at least one of an encrypted key, an encrypted profile, and certificate information. In addition, the communication unit 521 may transmit a response message according to a profile loading result. To this end, the communication unit 521 may include at least one communication module and an antenna.

In addition, according to an embodiment of the disclosure, the controller 523 may control each element of the UE 520 for profile installation according to the disclosure. The controller 523 may control overall operations of the UE 520. For example, the controller 523 may transmit or receive a signal through the communication unit 521. In addition, the controller 523 may record and read data in and from the storage 525. The controller 523 may include at least one processor. For example, the controller 523 may include a communication processor (CP) performing control for communication, and an application processor (AP) controlling an upper layer, such as an application program. According to an embodiment, when there is configuration information stored in the storage 523, the controller 523 may request the configuration information from the storage 525 and control the information to be displayed by a screen display unit (not shown), or process an additional operation, based on the configuration information.

According to another embodiment, the controller 523 may perform a processing process of inferring information that is referable for profile installation selection in the factory by matching a data record which is read from the storage 525 or information collected through the communication unit 521. The controller 523 may control the UE 520 to perform a corresponding operation. According to an embodiment, although not illustrated in the drawing, the controller 523 may include an FPA that is responsible for the operation and control of the eUICC 527, an application in which the FPA is integrally implemented, or an application that manages factory installation. Furthermore, the controller 523 may include a UE framework that interprets information received through the FPA or by an application, to process a specific command APDU request for a communication processor (CP), or collects part or all of requested information from the storage 525 and returns same to the FPA or the application.

In addition, according to an embodiment of the disclosure, the controller 523 may collectively consider predetermined information acquired from the eUICC 527 through the UE 520 and the communication unit 521 to determine an operation of entering an IFPP mode and control the eUICC 527 to enter the IFPP mode. The eUICC 527 may operate under the control of the controller 523. According to an embodiment of the disclosure, the eUICC 427 may process a request for profile installation received from the controller 423, and return a processing result to the controller 523.

In addition, the controller 523 according to an embodiment of the disclosure may control the communication unit 521 to receive a response message or profile information of a profile package from the factory IT 510 and, by referring to user input information or a UE configuration at the reception time, determine whether to perform profile installation in a factory mode, determine to enter an IFPP mode, or configure a message to be transmitted to the eUICC 527 to install a profile by IFPP. In addition, the controller 523 may configure profile information of a profile package to be one or more messages, and control a message including the profile information to be transmitted to the eUICC 527.

The storage 525 may store data such as a basic program, an application program, and configuration information for an operation of the UE 520. In an embodiment of the disclosure, the storage 525 may include at least one storage medium among a flash memory type, a hard disk type, a multimedia card micro type, a card-type memory (e.g., SD or XD memory), a magnetic memory, a magnetic disk, an optical disk, a random access memory (RAM), a static random access memory (SRAM), a read-only memory (ROM), a programmable read-only memory (PROM), and an electrically erasable programmable read-only memory (EEPROM). The storage 525 may be integrally implemented with the controller 523 as a system on a chip (SoC). The controller 523 may perform various operations by using various types of programs, content, and data stored in the storage 525.

The eUICC 527 is a UICC chip embedded in the UE 520 and may perform a function of storing, managing, and removing at least one profile. Here, a profile may collectively refer to one or multiple applications stored in a conventional UICC card, and data information such as subscriber authentication information, a phonebook, etc. The eUICC 527 may be included as a part of the UE 520 as illustrated in FIG. 1. For reference, FIG. 2A to FIG. 3B have illustrated the FPA and the eUICC 560 in the UE as separate modules to describe an operation between the FPA and the eUICC, but both of the modules may be understood as being included in a single UE. Although not illustrated in the drawing, the eUICC 527 may separately include a controller, a storage, and a communication unit for profile installation. In addition, some of the applications within the eUICC 527 may be installed in the controller 523, and the installed applications may include some functions of the FPA.

According to an embodiment of the disclosure, the controller of the eUICC 527 may acquire profile installation request information through a message of the UE 520 received via the communication unit, and then process profile installation or reply with a loading result according to the installation. In addition, the controller of the eUICC 527 may determine whether to enter IFPP through information within a received message or a new function defined for IFPP to determine an operation, accordingly, perform a profile installation or removal procedure for IFPP, and process received information by comparing and verifying same with information in the storage of the eUICC 527. For example, when a command for a profile installation request is received, the eUICC may verify a received profile package, perform an operation for installation, and sign and return a processing result to the UE 520 via the communication unit. As described above in embodiments of the disclosure, information processed through the controller 523 by comparing and verifying same with information in the storage of the eUICC 527 may be, for example, the same information as the presence or absence of otPK.EUICC.KA used for profile installation and certificate information of an SM-DPf.

However, the elements mentioned with reference to FIG. 5 are not limited to the example described above. For example, the factory IT 510 may include more or fewer elements than the above elements. For example, the profile server 500 may include more or fewer elements than the above elements. For example, the UE 520 may include more or fewer elements than the above elements. The UE 520 according to various embodiments disclosed in this document may be an electronic device, and the electronic device may be various types of devices. The electronic device may include, for example, a portable communication device (e.g., a smartphone), a computer device, a portable multimedia device, a portable medical device, a camera, a wearable device, or a home appliance device. An electronic device according to an embodiment of this document is not limited to the above devices.

In various embodiments of the disclosure, operations of an FPA, an LPA, and an eUICC are described separately, but it should be noted that this is for convenience of explanation, and the operations of the FPA, the LPA, and the eUICC may be described as operations of a UE. For example, a transmission/reception operation of the FPA may be described as a transmission/reception operation of the UE.

Methods disclosed in the claims and/or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in nonvolatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

## Claims

1. A method performed by an in-factory profile provisioning (IFPP) server in a communication system, the method comprising:
obtaining, from a manufacturer server of an embedded universal integrated circuit card (eUICC), encryption key information on each of a plurality of eUICCs;
transmitting, to a profile provisioning server, a request message for requesting a bound profile package (BPP) for at least one eUICC among the plurality of eUICCs based on the encryption key information,, the request message including encryption key-related information on each of the at least one eUICC; and
receiving, from the profile provisioning server, a response message including the BPP based on the request message,
wherein the encryption key-related information includes information associated with an algorithm used for generating a temporary key for each of the at least one eUICC, and
wherein the BPP transferred from the IFPP server via an application of a corresponding terminal is installed in an eUICC of the corresponding terminal.

2. The method of claim 1,
wherein the information associated with the algorithm includes information indicating an algorithm parameter used for generating the temporary key or information on an algorithm of an eUICC certificate used for generating the temporary key.

3. The method of claim 1,
wherein a temporary key for a particular eUICC among the at least one eUICC comprises a plurality of pairs, a pair being composed of a public key and a private key, and
wherein the information associated with the algorithm includes information on an algorithm parameter used for generating each pair of the public key and the private key.

4. The method of claim 1, wherein the request message further includes information on an algorithm for generating a session key used for installation of the BPP.

5. A method performed by a profile provisioning server in a communication system, the method comprising:
receiving, from an in-factory profile provisioning (IFPP) server, a request message for requesting a bound profile package (BPP) for at least one embedded universal integrated circuit card (eUICC), the request message including encryption key-related information on each of the at least one eUICC;
generating the BPP based on the encryption key-related information; and
transmitting, to the IFPP server, a response message including the BPP,
wherein the encryption key-related information includes information associated with an algorithm used for generating a temporary key for each of the at least one eUICC, and
wherein the BPP is installed in an eUICC of a corresponding terminal via the IFPP server.

6. The method of claim 5,
wherein the information associated with the algorithm includes information indicating an algorithm parameter used for generating the temporary key or information on an algorithm of an eUICC certificate used for generating the temporary key.

7. The method of claim 5,
wherein a temporary key for a particular eUICC among the at least one eUICC comprises a plurality of pairs, a pair being composed of a public key and a private key, and
wherein the information associated with the algorithm includes information on an algorithm parameter used for generating each pair of the public key and the private key.

8. The method of claim 5,
wherein the request message further includes information on a session key generation algorithm for generating a session key used for installation of the BPP, and
wherein the BPP is generated based on the session key, the session key being obtained based on the information on the session key generation algorithm.

9. An in-factory profile provisioning (IFPP) server in a communication system, the IFPP server comprising:
a transceiver; and
a controller configured to:
obtain, from a manufacturer server of an embedded universal integrated circuit card (eUICC), encryption key information on each of a plurality of eUICCs,
control the transceiver to transmit, to a profile provisioning server, a request message for requesting a bound profile package (BPP) for at least one eUICC among the plurality of eUICCs based on the encryption key information,, the request message including encryption key-related information on each of the at least one eUICC, and
control the transceiver to receive, from the profile provisioning server, a response message including the BPP based on the request message,
wherein the encryption key-related information includes information associated with an algorithm used for generating a temporary key for each of the at least one eUICC, and
wherein the BPP transferred from the IFPP server via an application of a corresponding terminal is installed in an eUICC of the corresponding terminal.

10. The IFPP server of claim 9,
wherein the information associated with the algorithm includes information indicating an algorithm parameter used for generating the temporary key or information on an algorithm of an eUICC certificate used for generating the temporary key.

11. The IFPP server of claim 9,
wherein a temporary key for a particular eUICC among the at least one eUICC comprises a plurality of pairs, a pair being composed of a public key and a private key, and
wherein the information associated with the algorithm includes information on an algorithm parameter used for generating each pair of the public key and the private key.

12. The IFPP server of claim 9,
wherein the request message further includes information on an algorithm for generating a session key used for installation of the BPP.

13. A profile provision server in a communication system, the profile provisioning server comprising:
a transceiver; and
a controller configured to:
control the transceiver to receive, from an in-factory profile provisioning (IFPP) server, a request message for requesting a bound profile package (BPP) for at least one embedded universal integrated circuit card (eUICC), the request message including encryption key-related information on each of the at least one eUICC,
generate the BPP based on the encryption key-related information, and
control the transceiver to transmit, to the IFPP server, a response message including the BPP,
wherein the encryption key-related information includes information associated with an algorithm used for generating a temporary key for each of the at least one eUICC, and
wherein the BPP is installed in an eUICC of a corresponding terminal via the IFPP server.

14. The profile provisioning server of claim 13,
wherein the information associated with the algorithm includes information indicating an algorithm parameter used for generating the temporary key or information on an algorithm of an eUICC certificate used for generating the temporary key, or information on an algorithm parameter used for generating each of a plurality of pairs included in a temporary key for a particular eUICC among the at least one eUICC, each pair being composed of a public key and a private key.

15. The profile provisioning server of claim 13,
wherein the request message further includes information on a session key generation algorithm for generating a session key used for installation of the BPP, and
wherein the controller is configured to generate the BPP based on the session key, the session key being obtained based on the information on the session key generation algorithm.
